# DEMANDE DE BREVET EUROPEEN

(11) **EP 4 501 794 A1**
(43) Date de publication de la demande: **05.02.2025**
(21) Numéro de dépôt: 24192241.8
(22) Date de dépôt: 01.08.2024
(51) Int. Cl.: B64D 31/06

(54) **DISPOSITIF ET PROCÉDÉ DE MODIFICATION SÉLECTIVE D'UNE INFORMATION DE POSITION DE MANETTE DES GAZ DANS UN AÉRONEF**

(30) Priorité: 04.08.2023 FR 2308481
(71) Demandeur: Airbus Operations SAS, 31060 Toulouse (FR)
(72) Inventeur: BRUNEL, Luc, 31060 TOULOUSE (FR); RINGEARD, Patrick, 31060 TOULOUSE (FR); JEGU, Patrick, 31060 TOULOUSE (FR); COLLAS, Xavier, 31060 TOULOUSE (FR); FLAMANT-BATI, Quentin-Alexandre, 31060 TOULOUSE (FR)
(74) Mandataire: Cabinet Le Guen Maillet

(57) **Abrégé**

L'invention concerne un procédé de modification sélective d'une information de position d'une manette des gaz. Le procédé est implémenté par un dispositif configuré pour recevoir une information de position, représentative d'une position courante de la manette. Le procédé comporte de déterminer (304) qu'une situation prédéfinie est rencontrée lorsqu'une condition de vol associée à la situation prédéfinie est vérifiée, et d'obtenir (306), pour chaque situation prédéfinie rencontrée, une catégorie, une durée et une position attendue de la manette des gaz. Le procédé comporte de modifier (312) l'information de position reçue en la remplaçant par la position attendue, lorsque la condition de vol et une condition de validité de la catégorie sont vérifiées simultanément pendant ladite durée obtenue, et d'envoyer à un dispositif de contrôle du moteur de propulsion l'information de position modifiée en cas de modification.

Ainsi, il est possible d'influer automatiquement sur la poussée du moteur lorsque la situation l'exige.

## Description

### DOMAINE TECHNIQUE

La présente invention concerne le domaine de la commande d'un moteur de propulsion d'un aéronef et concerne plus particulièrement un procédé visant à modifier sélectivement une information représentative d'une position de la manette des gaz du moteur de propulsion afin d'influer sur un calcul de poussée lorsque des situations prédéfinies sont rencontrées.

### ETAT DE LA TECHNIQUE ANTERIEURE

Chaque moteur de propulsion d'un aéronef est associé à une manette des gaz dont la position physique permet à un dispositif de contrôle du moteur de propulsion de calculer la poussée du moteur de propulsion.

Selon un premier mode de fonctionnement, dit mode manuel, la poussée du moteur de propulsion est déterminée en fonction de la position physique de la manette des gaz.

Selon un second mode de fonctionnement, dit mode de poussée automatique, la poussée du moteur de propulsion est déterminée en fonction d'autres paramètres mais ne doit pas dépasser un seuil maximal déterminé par la position physique de la manette des gaz.

La situation peut être améliorée. Il est souhaitable de fournir une solution permettant d'influer sur le calcul de la poussée lorsque la situation l'exige et lorsqu'un équipage n'agit pas sur la manette des gaz de manière attendue au regard de la situation rencontrée.

Il est notamment souhaitable de fournir une solution aisément intégrable à un système existant, sans modifier des dispositifs existants tels que le dispositif de contrôle du moteur de propulsion.

### EXPOSE DE L'INVENTION

Un objet de la présente invention est de proposer un procédé de modification automatisée d'une information de position d'une manette des gaz associée à un moteur de propulsion, le procédé étant implémenté par un dispositif configuré pour recevoir une information de position, représentative d'une position courante de la manette des gaz, le procédé comportant des étapes de : déterminer qu'une situation prédéfinie d'une liste de situations prédéfinies est rencontrée lorsqu'une condition, dite condition de vol, associée à la situation prédéfinie est vérifiée, chaque situation prédéfinie étant représentative d'une situation de vol dans laquelle un actionnement de la manette des gaz est jugé nécessaire ; pour chaque situation prédéfinie rencontrée, obtenir une catégorie associée à ladite situation prédéfinie, chaque situation prédéfinie étant associée à une catégorie parmi des catégories prédéfinies et chaque catégorie étant représentative d'un contexte prédéfini de pilotage, et obtenir une durée prédéfinie de déclenchement associée à la situation prédéfinie rencontrée et une position prédéfinie attendue de la manette des gaz dans ladite situation prédéfinie rencontrée ; évaluer une condition, dite condition de validité, associée à la catégorie obtenue ; modifier l'information de position reçue, en remplaçant la position courante de la manette des gaz par la position prédéfinie attendue de la manette des gaz obtenue, lorsque la condition de vol associée à la situation prédéfinie rencontrée et la condition de validité de la catégorie associée à ladite situation prédéfinie sont vérifiées simultanément pendant une durée au moins égale à ladite durée prédéfinie de déclenchement obtenue ; et envoyer à un dispositif de contrôle du moteur de propulsion l'information de position modifiée en cas de modification, et l'information de position reçue sinon.

Il est ainsi possible de modifier automatiquement l'information de position et donc d'influer automatiquement sur la poussée du moteur de propulsion lorsque la situation l'exige, autrement dit lorsqu'un actionnement de la manette des gaz est jugé nécessaire dans une situation de vol et que l'actionnement n'est pas réalisé par l'équipage, et ce sans modifier le dispositif de contrôle du moteur de propulsion.

Selon un mode de réalisation particulier, les catégories prédéfinies comportent une première catégorie présentant une condition de validité vérifiée lorsqu'un équipage est préalablement déclaré inapte, et la durée de déclenchement, associée à chaque situation prédéfinie de première catégorie, est nulle.

Selon un mode de réalisation particulier, les catégories prédéfinies comportent une deuxième catégorie présentant une condition de validité vérifiée lorsqu'un équipage n'est pas préalablement déclaré inapte, et la durée de déclenchement, associée à chaque situation prédéfinie de deuxième catégorie, dépend de la situation prédéfinie.

Selon un mode de réalisation particulier, les catégories prédéfinies comportent une troisième catégorie présentant une condition de validité toujours vérifiée, et la durée de déclenchement, associée à chaque situation prédéfinie de troisième catégorie, est nulle.

Selon un mode de réalisation particulier, la position prédéfinie attendue de la manette des gaz associée à au moins une situation prédéfinie de la liste de situations prédéfinies comprend une première position prédéfinie et une deuxième position prédéfinie, et modifier l'information de position reçue en remplaçant la position courante de la manette des gaz par la position prédéfinie attendue de la manette des gaz obtenue comprend d'opérer une première modification de l'information de position en remplaçant la position courante de la manette des gaz par la première position prédéfinie, et d'opérer une deuxième modification de l'information de position en remplaçant la position courante de la manette des gaz par la deuxième position prédéfinie, la deuxième modification de l'information de position étant opérée après l'écoulement d'un délai prédéfini associé à la situation prédéfini, à compter de la première modification.

L'invention concerne également un dispositif de modification automatisée d'une information de position d'une manette des gaz d'un moteur de propulsion, le dispositif de modification sélective automatisée comportant de la circuiterie électronique configurée pour recevoir une information de position, représentative d'une position courante de la manette des gaz. Le dispositif comporte de la circuiterie électronique configurée pour : déterminer qu'une situation prédéfinie d'une liste de situations prédéfinies est rencontrée lorsqu'une condition, dite condition de vol, associée à la situation prédéfinie est vérifiée, chaque situation prédéfinie étant représentative d'une situation de vol dans laquelle un actionnement de la manette des gaz est jugé nécessaire ; pour chaque situation prédéfinie rencontrée, obtenir une catégorie associée à ladite situation prédéfinie, chaque situation prédéfinie étant associée à une catégorie parmi des catégories prédéfinies et chaque catégorie étant représentative d'un contexte prédéfini de pilotage, et obtenir une durée prédéfinie de déclenchement associée à la situation prédéfinie rencontrée et une position prédéfinie attendue de la manette des gaz dans ladite situation prédéfinie rencontrée ; évaluer une condition, dite condition de validité, associée à la catégorie obtenue ; modifier l'information de position reçue, en remplaçant la position courante de la manette des gaz par la position prédéfinie attendue de la manette des gaz obtenue, lorsque la condition de vol associée à la situation prédéfinie rencontrée et la condition de validité de la catégorie associée à ladite situation prédéfinie sont vérifiées simultanément pendant une durée au moins égale à ladite durée prédéfinie de déclenchement obtenue ; et envoyer à un dispositif de contrôle du moteur de propulsion l'information de position modifiée en cas de modification, et l'information de position reçue sinon.

Il est également proposé ici un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig.1] illustre schématiquement un aéronef comportant un dispositif de modification sélective automatisée d'un système de commande d'un moteur de propulsion ;
[Fig. 2] illustre schématiquement le système de commande d'un moteur de propulsion de l'aéronef ;
[Fig. 3] illustre schématiquement un procédé de modification sélective d'une information représentative d'une position d'une manette des gaz du moteur de propulsion ; et
[Fig. 4] illustre schématiquement un exemple de plateforme matérielle permettant d'implémenter le dispositif de modification automatisée.

### EXPOSE DETAILLE DE MODES DE REALISATION

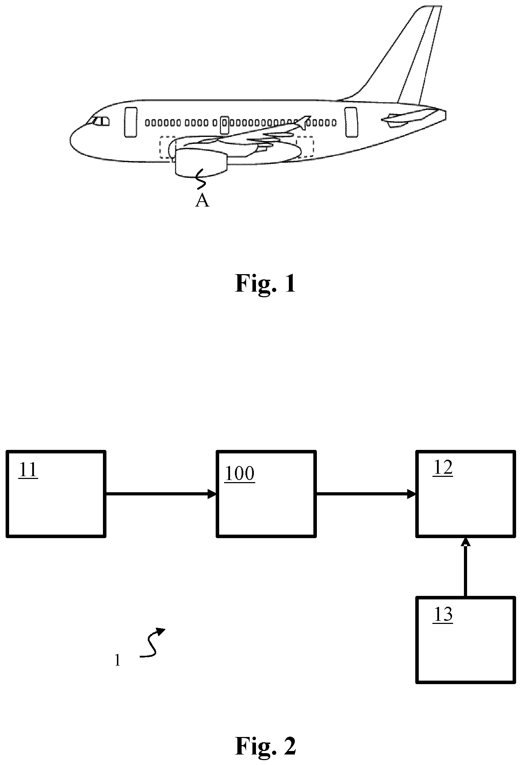

La **Fig. 1** illustre schématiquement un aéronef A comportant un dispositif de modification sélective automatisée d'un système de commande 1 d'un moteur de propulsion.

En référence à la figure 2, le système de commande 1 d'un moteur de propulsion de l'aéronef A comprend une manette des gaz 11, un dispositif de contrôle 12 du moteur de propulsion et un dispositif de gestion 13 d'un mode de poussée automatique. La manette des gaz 11 est actionnée par un équipage afin d'en faire varier la position. A chaque actionnement de la manette des gaz 11, ladite manette des gaz 11 émet une information de position, représentative d'une position courante de la manette des gaz 11.

Le dispositif de contrôle 12 reçoit une information de position, représentative d'une position de la manette des gaz 11, et est configuré pour déterminer la poussée du moteur de propulsion en tenant compte de l'information de position reçue. Dans un premier mode de fonctionnement, dit mode manuel, le dispositif de contrôle 12 détermine la poussée en fonction de ladite information de position reçue. Dans un deuxième mode de fonctionnement, dit mode de poussée automatique, la poussée est déterminée par le dispositif de gestion 13 et transmise au dispositif de contrôle 12 par un lien de communication. Le dispositif de contrôle 12 détermine un seuil maximal de poussée en fonction de l'information de position reçue, le seuil maximal de poussée étant un seuil à ne pas dépasser. Dit autrement, lorsque le dispositif de gestion 13 transmet au dispositif de contrôle 12 une valeur de poussée supérieure au seuil maximal de poussée, le dispositif de contrôle 12 limite la poussée audit seuil maximal de poussée.

Le dispositif de gestion 13 du mode de poussée automatique est configuré pour déterminer la poussée du moteur de propulsion en fonction de paramètres de l'aéronef A.

Le système de commande 1 comporte en outre un dispositif de modification sélective automatisée 100. Le dispositif de modification sélective automatisée 100 est configuré pour recevoir, en provenance de la manette des gaz 11, chaque information de position émise par la manette des gaz 11. Le dispositif de modification sélective automatisée 100 est en outre configuré pour modifier conditionnellement l'information de position reçue et pour envoyer au dispositif de contrôle 12 du moteur de propulsion l'information de position modifiée en cas de modification, et pour envoyer l'information de position reçue sinon.

La modification conditionnelle de l'information de position reçue est opérée par le dispositif de modification sélective automatisée 100 lorsqu'une situation prédéfinie, parmi une liste de situations prédéfinies, est détectée et lorsque ladite situation prédéfinie se maintient pendant une durée seuil de déclenchement associée à la situation prédéfinie détectée et qu'une condition de validité d'une catégorie associée à ladite situation prédéfinie reste satisfaite pendante ladite durée seuil de déclenchement.

Pour cela, le dispositif de modification sélective automatisée 100 évalue, pour chaque situation prédéfinie de la liste de situations prédéfinies, une condition, dite condition de vol, associée à ladite situation prédéfinie. Lorsque la condition de vol associée à une dite situation prédéfinie est vérifiée, ladite situation prédéfinie est rencontrée et détectée. Le dispositif de modification sélective automatisée 100 obtient alors une catégorie, parmi des catégories prédéfinies, qui est associée à la situation prédéfinie rencontrée, et évalue une condition, dite condition de validité, associée à ladite catégorie. Le dispositif de modification sélective automatisée 100 obtient en outre, pour chaque situation prédéfinie rencontrée, une durée prédéfinie de déclenchement associée à la situation prédéfinie détectée et une position prédéfinie attendue de la manette des gaz 11 dans la situation prédéfinie détectée. Chaque information associée à la situation prédéfinie rencontrée telle que la catégorie, la durée prédéfinie de déclenchement ou la position prédéfinie attendue de la manette des gaz 11 peut être obtenue par exemple par le biais d'une requête dans une base de données à partir d'une information représentative de la situation prédéfinie détectée. Lorsque la condition de vol et que la condition de validité de la catégorie associée à la situation prédéfinie rencontrée sont vérifiées simultanément pendant une durée au moins égale à la durée prédéfinie de déclenchement obtenue, le dispositif de modification sélective automatisée 100 modifie l'information de position reçue en provenance de la manette des gaz 11, en remplaçant la position courante de la manette des gaz 11 par la position prédéfinie attendue de la manette des gaz 11 associée à la situation prédéfinie détectée.

Chaque position prédéfinie de la manette des gaz 11 définit une poussée du moteur de propulsion. Ainsi, en cas de modification de l'information de position par le dispositif de modification sélective automatisée 100, le dispositif de contrôle 12 calcule la poussée en fonction de la position prédéfinie de la manette des gaz 11 associée à la situation prédéfinie détectée lorsque le mode manuel est activé, et le dispositif de contrôle 12 calcule le seuil maximal de poussée en fonction de la position prédéfinie de la manette des gaz 11 associée à la situation prédéfinie détectée lorsque le mode de poussée automatique est activé.

Des exemples de positions prédéfinies sont, selon un ordre croissant de poussée associée, une position de ralenti (« idle » en anglais), une position d'ascension (« climb » en anglais), une position de poussée continue maximale (« Max Continuous » en anglais) et une position de poussée maximale disponible. Selon un exemple de réalisation, il existe un nombre prédéfini de positions prédéfinies attendues de la manette des gaz 11.

Chaque situation prédéfinie est représentative d'une situation de vol ou d'un contexte de vol prédéfini, dans lequel un actionnement de la manette des gaz 11 est jugé nécessaire afin d'atteindre une position prédéfinie attendue. Chaque condition de vol dépend de paramètres de vol et de la position courante de la manette des gaz 11. Un exemple de situation prédéfinie est une panne du moteur de propulsion commandé par le système de commande 1. La condition de vol permettant de le détecter est qu'une panne du moteur est détectée et que la position courante de la manette des gaz 11 est différente de la position de ralenti. Un autre exemple de situation prédéfinie est un besoin de remise des gaz (« Go-Around » en anglais), la condition de vol associée étant une détection de besoin de remise des gaz et une position courante de la manette des gaz 11 différente de la position de poussée maximale disponible.

Chaque situation prédéfinie est associée à l'une des catégories prédéfinies, chacune des catégories prédéfinies étant représentative d'un contexte de pilotage. Les catégories prédéfinies définissent chacune un degré d'urgence d'un actionnement de la manette des gaz 11, qui dépend de la situation prédéfinie et de l'aptitude d'un équipage. Selon un mode de réalisation préférentiel, une première catégorie correspond à une incapacité de l'équipage. La condition de validité de la première catégorie est que l'équipage doit préalablement être déclaré inapte. L'équipage est déclaré inapte lorsque l'équipage ne peut pas actionner physiquement la manette des gaz 11, par exemple lorsque l'équipage est absent de la cabine de pilotage lors d'une pause physiologique ou lorsque l'équipage éprouve une incapacité physique. Une deuxième catégorie correspond à un équipage déclaré apte, sans urgence liée à la situation prédéfinie. Tant que l'équipage n'est pas déclaré inapte, la condition de validité de la deuxième catégorie est vérifiée. Une troisième catégorie correspond à une urgence, que l'équipage soit apte ou non. La condition de validité de la troisième catégorie est toujours vérifiée.

Afin de vérifier la condition de validité d'une catégorie, le dispositif de modification sélective automatisée 100 récupère par exemple des données issues d'un système de gestion de vol FMS (pour « Flight Management System » en anglais) ou plus généralement issues de l'avionique de l'aéronef A afin de déterminer si des actions manuelles sont effectuées dans la cabine de pilotage. Par exemple, l'équipage est déclaré apte tant que des actions manuelles sont détectées à des intervalles inférieurs à un laps de temps prédéterminé, ou lorsqu'un indicateur d'incapacité est désactivé ou encore lorsqu'un mouvement est détecté dans la cabine de pilotage par une caméra vidéo, et les deuxième et troisième catégories sont alors applicables. En revanche l'équipage est déclaré inapte lorsqu'aucune action manuelle n'a été détectée pendant le laps de temps prédéterminé, ou lorsqu'un indicateur d'incapacité de l'équipage est activé par l'équipage lui-même, par exemple avant une absence de l'équipage, ou encore lorsqu'aucun mouvement n'est détecté dans la cabine de pilotage par une caméra vidéo depuis un laps de temps prédéterminé. Les première et troisième catégories sont alors applicables.

En outre, la durée prédéfinie de déclenchement dépend de la situation prédéfinie rencontrée et de la catégorie. Par exemple, chaque situation prédéfinie de première catégorie est associée à une durée prédéfinie de déclenchement nulle, de sorte que lorsque l'équipage est préalablement déclaré inapte, une situation prédéfinie nécessitant un actionnement de la manette des gaz 11 entraînera une modification de l'information de position sans délai. De même, chaque situation prédéfinie de troisième catégorie est associée à une durée prédéfinie de déclenchement nulle, de sorte que lorsqu'une situation prédéfinie nécessite un actionnement urgent de la manette des gaz 11, une modification de l'information de position est opérée sans délai. En revanche, chaque situation prédéfinie de deuxième catégorie est associée à une durée prédéfinie de déclenchement variable selon la situation prédéfinie considérée, et préférentiellement non nulle, de sorte que l'équipage, déclaré apte, ait la possibilité d'actionner la manette des gaz 11 avant qu'une modification automatique de l'information de position soit opérée.

Par exemple, la situation prédéfinie de panne du moteur décrit ci-dessus est associé à une situation prédéfinie de première catégorie, la durée de déclenchement associée étant alors nulle. Selon un autre exemple, la situation prédéfinie de panne du moteur est associée à une situation prédéfinie de deuxième catégorie, avec une durée de déclenchement non nulle, par exemple égale à 4 minutes. La position prédéfinie de la manette des gaz 11 est une position de ralenti.

La situation prédéfinie de besoin de remise des gaz est par exemple associée à une situation prédéfinie de première catégorie, avec une durée de déclenchement nulle.

Selon un autre exemple de situation prédéfinie de première catégorie, une condition de vol est qu'un seuil inférieur d'altitude est atteint lors d'un atterrissage avec une position courante de la manette des gaz 11 différente de la position de ralenti. La position prédéfinie associée est la position de ralenti, ce qui permet de déployer les aérofreins lorsque l'aéronef A touche le sol.

Selon un autre exemple de situation prédéfinie de première catégorie, une condition de vol est que l'aéronef A est en phase de roulage (ou « taxi » en anglais) et la position prédéfinie associée est la position de ralenti, ce qui permet à l'aéronef A de s'arrêter automatiquement lorsque l'équipage est en incapacité.

Des exemples de situations prédéfinies de deuxième catégorie sont présentés ci-après. Selon un premier exemple, une condition de vol est qu'un seuil d'altitude supérieur est atteint lors d'un décollage ou d'une opération de remise des gaz, et que la position courante de la manette des gaz 11 reste supérieure à la position d'ascension. La position prédéfinie associée est la position d'ascension avec une durée de déclenchement associée non nulle. Cela permet à l'aéronef A de réduire la poussée et, selon un mode de réalisation particulier, d'engager en outre le mode de poussée automatique. Selon un deuxième exemple, une condition de vol est qu'une panne du moteur est détectée sur un autre moteur de propulsion, la position prédéfinie associée étant une position de poussée continue maximale avec une durée de déclenchement associée non nulle. Cela permet de compenser la perte de poussée en raison de la panne de l'autre moteur. Selon un troisième exemple, dans un contexte de décollage dit économique, autrement dit un décollage avec une poussée inférieure à la poussée maximale disponible, lorsqu'un seuil de température n'est pas atteint, la position prédéfinie associée est la position de poussée maximale disponible avec une durée de déclenchement associée non nulle, par exemple de 8 secondes. Cela permet d'assurer un décollage en toute sécurité lorsque des conditions nécessaires au décollage économique ne sont pas satisfaites.

Des exemples de situations prédéfinies de troisième catégorie sont présentés ci-après. Selon un premier exemple, une condition de vol est qu'un rejet de décollage est déclenché, ce qui correspond à un contexte selon lequel le décollage doit être interrompu, et que la position de la manette des gaz 11 est différente de la position de ralenti. La position prédéfinie est la position de ralenti, avec une durée de déclenchement nulle. Selon un deuxième exemple, une condition de vol, définie dans le contexte d'un décollage, est qu'une panne est détectée sur un autre moteur de propulsion et qu'un premier seuil de vitesse, dit seuil d'engagement à voler, est dépassé. La position prédéfinie associée est la position de poussée maximale disponible, avec une durée de déclenchement nulle. Selon un troisième exemple, une condition de vol est que le déploiement d'un inverseur de poussée est détecté pendant une phase de vol, autrement dit hors atterrissage et roulage. La position prédéfinie associée est la position de ralenti avec une durée de déclenchement nulle. Cela permet d'assurer la stabilité de l'aéronef A. Selon un quatrième exemple, une condition de vol est qu'un angle d'attaque de l'aéronef A est supérieur à un seuil d'angle prédéfini, traduisant un risque de décrochage, et que la position de la manette des gaz 11 n'est pas au maximum. La position prédéfinie associée est la position de poussée maximale disponible, avec une durée de déclenchement nulle. Cela permet d'accélérer l'aéronef A afin d'empêcher le décrochage.

Selon un mode de réalisation particulier, chaque moteur de propulsion de l'aéronef A est commandé par un système de commande 1 tel qu'illustré en Fig. 1, l'aéronef A comportant ainsi autant de dispositifs de modification sélective automatisée 100 que de moteurs de propulsion.

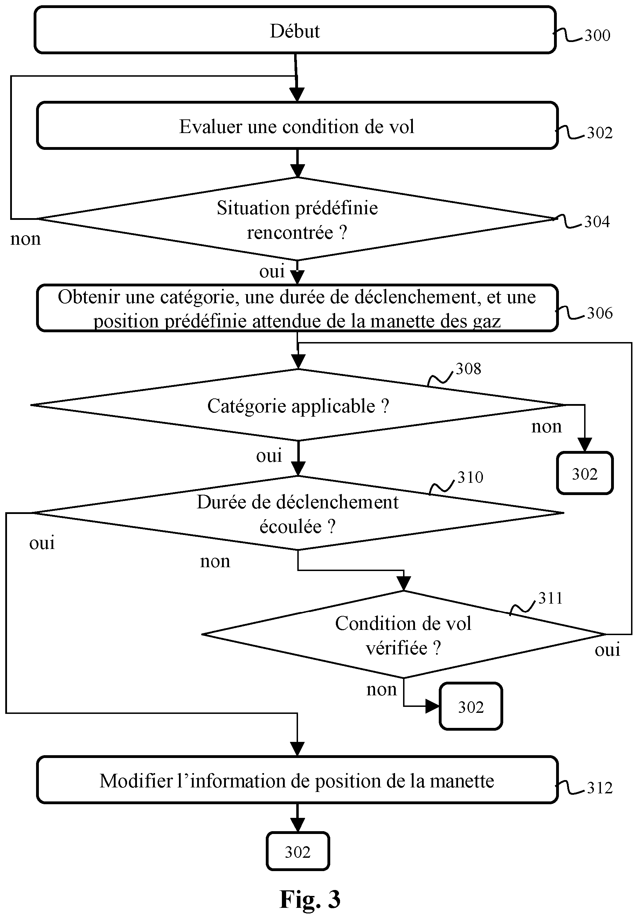

En référence à la figure 3, un procédé de modification conditionnelle d'une information représentative d'une position d'une manette des gaz 11, implémenté par le dispositif de modification sélective automatisée 100, comprend les étapes suivantes.

Dans une première étape 300, le procédé est initialisé, par exemple lors d'une mise sous tension du dispositif de modification sélective automatisée 100 ou lorsque le moteur de propulsion est allumé.

Dans une étape 302 suivante, le dispositif de modification sélective automatisée 100 évalue, pour chaque situation prédéfinie de la liste de situations prédéfinies, une condition de vol, associée à ladite situation prédéfinie. Par exemple, le dispositif de modification sélective automatisée 100 effectue une surveillance de paramètres de l'aéronef A et les compare à chaque condition de vol associée à une situation prédéfinie de la liste.

Dans une étape 304 suivante, le dispositif de modification sélective automatisée 100 détermine si une situation prédéfinie est rencontrée et détectée. Lorsque le dispositif de modification sélective automatisée 100 détermine que la condition de vol associée à l'une des situations prédéfinies est vérifiée, alors ladite situation prédéfinie est rencontrée et détectée. Si c'est le cas, alors une étape 306 est effectuée. Sinon, lorsqu'aucune situation prédéfinie n'est détectée, le procédé retourne à l'étape 302.

A l'étape 306, le dispositif de modification sélective automatisée 100 obtient des informations associées à la situation prédéfinie détectée que sont une catégorie, une durée prédéfinie de déclenchement et une position prédéfinie de la manette des gaz 11 attendue dans la situation prédéfinie rencontrée. Selon un exemple, le dispositif de modification sélective automatisée 100 interroge une base de données stockant, pour chaque situation prédéfinie, l'ensemble des informations associées, et récupère ainsi lesdites informations associées. Le dispositif de modification sélective automatisée 100 obtient ou récupère en outre la condition de validité de la catégorie obtenue.

Dans une étape 308 suivante, le dispositif de modification sélective automatisée 100 détermine si la catégorie associée à la situation prédéfinie considérée est applicable, autrement dit si la condition de validité de ladite catégorie est satisfaite. Si c'est le cas, la catégorie étant applicable, une étape 310 est effectuée. Sinon, le procédé retourne à l'étape 302.

Par exemple, pour une situation prédéfinie de première catégorie, le dispositif de modification sélective automatisée 100 vérifie si l'équipage est préalablement déclaré inapte. Si c'est le cas, la première catégorie est applicable et l'étape 310 est effectuée. Pour une situation prédéfinie de deuxième catégorie, le dispositif de modification sélective automatisée 100 vérifie que l'équipage n'a pas été préalablement déclaré inapte, et passe à l'étape 310 si aucune inaptitude de l'équipage n'est déclarée ou retourne à l'étape 302 sinon. Pour une situation prédéfinie de troisième catégorie, le dispositif de modification sélective automatisée 100 considère que la condition de validité est toujours vérifiée et passe alors nécessairement à l'étape 310. A l'étape 310, le dispositif de modification sélective automatisée 100 détermine si la durée prédéfinie de déclenchement associée à la situation prédéfinie détectée est écoulée, depuis la détection de la situation prédéfinie en question. Si c'est le cas, une étape 312 est effectuée. Sinon, une étape 311 est effectuée.

A l'étape 311, le dispositif de modification sélective automatisée 100 détermine si la condition de vol associée à la situation prédéfinie est encore vérifiée. Si c'est le cas, le procédé retourne à l'étape 308. Sinon, le procédé retourne à l'étape 302. Ainsi, pour une situation prédéfinie de deuxième catégorie, si l'équipage a effectué un actionnement de la manette des gaz 11 jugé nécessaire dans la situation prédéfinie considérée et que la condition de vol n'est alors plus vérifiée, il n'est plus nécessaire de modifier l'information de position de la manette des gaz 11 de manière automatique.

A l'étape 312, le dispositif de modification sélective automatisée 100 modifie l'information représentative de la position courante de la manette des gaz 11 reçue en provenance de la manette des gaz 11 en remplaçant la position courante de la manette des gaz 11 par la position prédéfinie attendue de la manette des gaz 11 dans la situation prédéfinie détectée, puis transmet ladite information modifiée, représentative de ladite position prédéfinie, au dispositif de contrôle 12.

Le procédé retourne ensuite à l'étape 302.

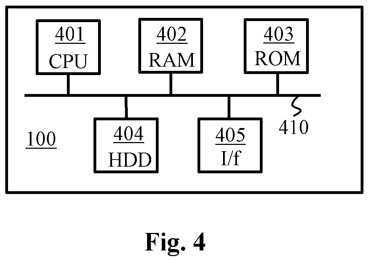

La **Fig. 4** illustre schématiquement un exemple de plateforme matérielle permettant d'implémenter, sous forme de circuiterie électronique, le dispositif de modification sélective automatisée 100.

La plateforme matérielle comporte, reliés par un bus de communication 410 : un processeur ou CPU (« Central Processing Unit » en anglais) 401 ; une mémoire vive RAM (« Random-Access Memory » en anglais) 402 ; une mémoire morte 403, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 404, ou un lecteur de support de stockage, tel qu'un lecteur de cartes SD (« Secure Digital » en anglais) ; et un gestionnaire d'interfaces I/f 405.

Le gestionnaire d'interfaces I/f 405 permet au dispositif de modification sélective automatisée 100 d'interagir avec la manette des gaz 11, avec le dispositif de contrôle 12 et avec des équipements de l'aéronef A tels que des capteurs, une avionique, afin de recevoir des valeurs de paramètres prédéfinis.

Le processeur 401 est capable d'exécuter des instructions chargées dans la mémoire vive 402 à partir de la mémoire morte 403, d'une mémoire externe, d'un support de stockage (tel qu'une carte SD), ou d'un réseau de communication. Lorsque la plateforme matérielle est mise sous tension, le processeur 401 est capable de lire de la mémoire vive 402 des instructions et de les exécuter. Ces instructions forment un programme d'ordinateur causant l'implémentation, par le processeur 401, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Spécifie Integrated Circuit» en anglais). D'une manière générale, le dispositif de modification sélective automatisée 100 comporte de la circuiterie électronique adaptée et configurée pour implémenter les fonctionnements, procédés et étapes décrits ici.

## Revendications

1. Procédé de modification sélective automatisée d'une information de position d'une manette des gaz (11) associée à un moteur de propulsion d'aéronef, le procédé étant implémenté par un dispositif (100) configuré pour recevoir une information de position, représentative d'une position courante de la manette des gaz (11), le procédé étant **caractérisé en ce qu'**il comporte des étapes de :
- déterminer (304) qu'une situation prédéfinie d'une liste de situations prédéfinies est rencontrée lorsqu'une condition, dite condition de vol, associée à la situation prédéfinie est vérifiée, chaque situation prédéfinie étant représentative d'une situation de vol dans laquelle un actionnement de la manette des gaz est jugé nécessaire,
- pour chaque situation prédéfinie rencontrée, obtenir (306) une catégorie associée à ladite situation prédéfinie, chaque situation prédéfinie étant associée à une catégorie parmi des catégories prédéfinies et chaque catégorie étant représentative d'un contexte prédéfini de pilotage, et obtenir (306) une durée prédéfinie de déclenchement associée à la situation prédéfinie rencontrée et une position prédéfinie attendue de la manette des gaz (11) dans ladite situation prédéfinie rencontrée,
- évaluer (308) une condition, dite condition de validité, associée à la catégorie obtenue,
- modifier (312) l'information de position reçue, en remplaçant la position courante de la manette des gaz (11) par la position prédéfinie attendue de la manette des gaz (11) obtenue, lorsque la condition de vol associée à la situation prédéfinie rencontrée et la condition de validité de la catégorie associée à ladite situation prédéfinie sont vérifiées simultanément pendant une durée au moins égale à ladite durée prédéfinie de déclenchement obtenue, et
- envoyer à un dispositif de contrôle (12) du moteur de propulsion l'information de position modifiée en cas de modification, et l'information de position reçue sinon.

2. Procédé selon la revendication 1, dans lequel les catégories prédéfinies comportent une première catégorie présentant une condition de validité vérifiée lorsqu'un équipage est préalablement déclaré inapte, et dans lequel la durée de déclenchement, associée à chaque situation prédéfinie de première catégorie, est nulle.

3. Procédé selon la revendication 1 ou 2, dans lequel les catégories prédéfinies comportent une deuxième catégorie présentant une condition de validité vérifiée lorsqu'un équipage n'est pas préalablement déclaré inapte, et dans lequel la durée de déclenchement, associée à chaque situation prédéfinie de deuxième catégorie, dépend de la situation prédéfinie.

4. Procédé selon l'une quelconque des revendications 1 à 3, dans lequel les catégories prédéfinies comportent une troisième catégorie présentant une condition de validité toujours vérifiée, et dans lequel la durée de déclenchement, associée à chaque situation prédéfinie de troisième catégorie, est nulle.

5. Procédé selon l'une quelconque des revendications 1 à 4, dans lequel la position prédéfinie attendue de la manette des gaz (11) associée à au moins une situation prédéfinie de la liste de situations prédéfinies comprend une première position prédéfinie et une deuxième position prédéfinie, et dans lequel modifier l'information de position reçue en remplaçant la position courante de la manette des gaz (11) par la position prédéfinie attendue de la manette des gaz (11) obtenue comprend :
- opérer une première modification de l'information de position en remplaçant la position courante de la manette des gaz par la première position prédéfinie,
- et après l'écoulement d'un délai prédéfini associé à la situation prédéfinie, opérer une deuxième modification de l'information de position en remplaçant la position courante de la manette des gaz par la deuxième position prédéfinie.

6. Dispositif de modification sélective automatisée (100) d'une information de position d'une manette des gaz (11) d'un moteur de propulsion d'aéronef, le dispositif de modification sélective automatisée (100) comportant de la circuiterie électronique configurée pour recevoir une information de position, représentative d'une position courante de la manette des gaz (11), le dispositif de modification sélective automatisée (100) étant **caractérisé en ce qu'**il comporte de la circuiterie électronique configurée pour :
- déterminer (304) qu'une situation prédéfinie d'une liste de situations prédéfinies est rencontrée lorsqu'une condition, dite condition de vol, associée à la situation prédéfinie est vérifiée, chaque situation prédéfinie étant représentative d'une situation de vol dans laquelle un actionnement de la manette des gaz est jugé nécessaire,
- pour chaque situation prédéfinie rencontrée, obtenir (306) une catégorie associée à ladite situation prédéfinie, chaque situation prédéfinie étant associée à une catégorie parmi des catégories prédéfinies et chaque catégorie étant représentative d'un contexte prédéfini de pilotage, et obtenir (306) une durée prédéfinie de déclenchement associée à la situation prédéfinie rencontrée et une position prédéfinie attendue de la manette des gaz (11) dans ladite situation prédéfinie rencontrée,
- évaluer (308) une condition, dite condition de validité, associée à la catégorie obtenue,
- modifier (312) l'information de position reçue, en remplaçant la position courante de la manette des gaz (11) par la position prédéfinie attendue de la manette des gaz (11) obtenue, lorsque la condition de vol associée à la situation prédéfinie rencontrée et la condition de validité de la catégorie associée à ladite situation prédéfinie sont vérifiées simultanément pendant une durée au moins égale à ladite durée prédéfinie de déclenchement obtenue, et
- envoyer à un dispositif de contrôle (12) du moteur de propulsion l'information de position modifiée en cas de modification, et l'information de position reçue sinon.

7. Aéronef (A) comportant un dispositif de modification sélective automatisée (100) selon la revendication 6.

8. Produit programme d'ordinateur, comportant des instructions entraînant l'exécution, par un processeur, du procédé selon l'une quelconque des revendications 1 à 5, lorsque lesdites instructions sont exécutées par le processeur.

9. Support de stockage, stockant un programme d'ordinateur comportant des instructions entraînant l'exécution, par un processeur, du procédé selon l'une quelconque des revendications 1 à 5, lorsque lesdites instructions sont lues et exécutées par le processeur.
